**Europäisches Patentamt**

**European Patent Office**

**Office européen des brevets**

(11) Veröffentlichungsnummer: **0 185 338 B1**

# EUROPÄISCHE PATENTSCHRIFT

(45) Veröffentlichungstag der Patentschrift:
**24.05.89**

(21) Anmeldenummer: **85115992.1**

(22) Anmeldetag: **14.12.85**

(51) Int. Cl.⁴: **C25D 13/06**, C09D 5/44

(54) Verfahren zum Beschichten von elektrisch leitfähige Oberflächen aufweisenden Substraten.

(30) Priorität: **15.12.84 DE 3445857**

(43) Veröffentlichungstag der Anmeldung:
**25.06.86 Patentblatt 86/26**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**US-A- 4 025 409**

(73) Patentinhaber: **Herberts Gesellschaft mit beschränkter Haftung, Christbusch 25, D-5600 Wuppertal 2(DE)**

(72) Erfinder: **Bleckmann, Wolfgang, Dr., Carnaper-Strasse 49, D-5600 Wuppertal 2(DE)**
Erfinder: **Hönig, Helmut, Dr., Am Bredtchen 80, D-5600 Wuppertal 1(DE)**
Erfinder: **Pinner, Christian, Dr. Dipl.-Chem., Rüdiger-Strasse 1-3, D-5000 Köln 91(DE)**
Erfinder: **Saatweber, Dietrich, Dr. Dipl.-Chem., Forststrasse 22, D-5600 Wuppertal 21(DE)**

(74) Vertreter: **Türk, Gille, Hrabal, Bruckner Strasse 20, D-4000 Düsseldorf 13(DE)**

**Beschreibung**

Die Erfindung betrifft ein Verfahren zum Beschichten von elektrisch leitfähige Oberflächen aufweisenden Substraten durch Auftragen einer ETL-Grundierung, Trocknen oder Einbrennen dieser Grundierung und Aufbringen und Einbrennen von mindestens einer an sich bekannten Folgeschicht.

Eine wichtige Rolle in der Autoindustrie spielt der Korrosions- und Steinschlagschutz. Für diesen Schutz sind maßgeblich Grundierung und Füller verantwortlich. Ein besonderes Problem ist dabei der Korrosions- und Steinschlagschutz an Schweißnähten und am Karosserieunterboden. Hier werden Verbesserungen durch zusätzliches Beschichten mit einer Nachfolgeschicht, z.B. PVC-Materialien nach dem Einbrennen der Grundierung erreicht. Diese Schutz ist um so wirkungsvoller, je besser die Haftung der Nachfolgeschicht zur Grundierung ist.

Stand der Technik für Grundierungen z.B. im Automobilbereich sind kathodisch oder anodisch abscheidbare Elektrotauchlacke. Die anodisch abscheidbaren Elektrotauchlacke werden als ATL, die kathodisch abscheidbaren als KTL und beide zusammen als ETL (Elektrotauchlack) bezeichnet.

Nachfolgeschichten der Grundierung können Füller, z.B. auf der Basis von Alkyd- und Melaminharzen, Plastisole - d.h. Dispersionen von Kunststoffen, insbesondere PVC, in Weichmachern - oder auch Decklacke sein.

Sowohl aus technischen Gründen (z.B. Kunststoffteile am Auto) als auch zur Energieeinsparung fordert die Industrie immer niedrigere Einbrenntemperaturen für Grundierungen und Nachfolgeschichten, wobei die Eigenschaften der Materialien, wie Korrosions- und Steinschlagschutz, erhalten bleiben sollen.

Nach dem Stand der Technik treten jedoch bei niedrigen Einbrenntemperaturen, besonders unterhalb 150°C, Haftungsschwierigkeiten mit Nachfolgeschichten auf. Damit werden die guten Eigenschaften der Nachfolgeschichten, insbesondere der PVC-Materialien in Bezug auf den Korrosions- und Steinschlagschutz gemindert.

Die Härtung von Elektrotauchlacken mit doppelbindungshaltigen Bindemitteln durch energiereiche Strahlung ist in den US-A-4 025 409, US-A-4 040 925, 4 035 272, 4 252 734, 4 039 414, 4 029 561 und DE-A-2 301 075 und 3 005 034 beschrieben. Auch die Kombination von Oftentrocknung und Vernetzung von doppelbindungshaltigen ETL-Grundierungen durch UV-Bestrahlung ist aus den US-A-4 035 274 und 4066523 bekannt. Diese Elektrotauchlacke sind aus verschiedenen Gründen in der Praxis nicht im Einsatz: sie ziegen z.B. eine starke Vergilbung im UV-Licht sowie eine geringere PVC-Haftung als die heutigen ETL-Lacke.

Eine Oberflächenbehandlung durch Corona-Entladung - eine stille Glimmentladung, die unter Luft zur Bildung von Ozon führt - kann zwar mit einer Verbesserung der Nachfolgeschicht verbunden sein, doch ist die Haftungsverbesserung immer noch unbefriedigend.

Der vorliegenden Erfindung liegt die Aufgabenstellung zugrunde, das Verfahren zum Beschichten der Substrate dahingehend zu verbessern, daß eine verbesserte Haftung der Nachfolgeschichten auf der ETL-Grundierung erzielt wird. Besonders liegt der Erfindung die Aufgabenstellung zugrunde, eine verbesserte Haftung zwischen der KTL-Grundierung und einer nachfolgenden PVC-Beschichtung zu erzielen.

Überraschenderweise wurde gefunden, daß diese Aufgabenstellung gelöst werden kann, wenn das Bindemittel der ETL-Grundierung ein aliphatisch gesättigtes, gegebenenfalls aromatische Gruppen enthaltendes Kunstharz ist, und nach dem Vortrocknen oder Einbrennen mit energiereichen Strahlen mit einer Wellenlänge unterhalb von 400 mm, wie UV-Licht oder Elektronenstrahlen, besonders aber UV-Licht, bestrahlt wird.

Die Erfindung betrifft demgemäß das in den Patentansprüchen 1–6 beschriebene Verfahren.

ETL-Lacke sind wasserverdünnbare, kathodisch oder anodisch abscheidbare Elektrotauchlacke. ATL-Grundierungen enthalten saure Basisharze, die gemäß dem Stand der Technik und vorzugsweise gemäß der Erfindung Säurezahlen von 20 bis 200, vorzugsweise zwischen 35 und 120 und mittlere Molekulargewichte zwischen 300 und 8000, bevorzugt zwischen 2000 und 6000 aufweisen. Als Säuregruppen können -COOH, $-PO_3H_2$ oder $-SO_3H$, besonders aber -COOH, auftreten.

Basisharze sind z.B. gesättigte Polyester, selbst- und fremdvernetzende Polyacrylatharze, gesättigte Epoxidharzester oder Polyurethanharze. Als Vernetzungsmittel können Melaminharze, Phenolharze und/oder blockierte Isocyanate eingesetzt werden, sowie bei Einsatz von Pulverlacken auch Polyepoxidharze.

KTL-Grundierungen enthalten basische Basisharze, die gemäß dem Stand der Technik und vorzugsweise gemäß der Erfindung Aminzahlen von 20 bis 200, vorzugsweise von 30 bis 100 und mittlere Molekulargewichte zwischen 400 und 10000, bevorzugt zwischen 1500 und 3000 aufweisen. Funktionelle Gruppen sind z.B. $-NH_2$, -NRH, $NR_3^{\oplus}$, $-SR_2^{\oplus}$ und $-PR_3^{\oplus}$. Bevorzugt sind primäre, sekundäre und tertiäre Amine. Basisharze sind z.B. Aminoepoxidharze (z.B. auf der Basis Bisphenol A, umgesetzt mit Epichlorhydrin), Aminopolyacrylatharze, Polyaminoamide sowie Aminopolyurethane. Als Vernetzungsmittel eignen sich Melaminharze, Phenolharze, blockierte Isocyanate oder umesterungsfähige Vernetzer. Bevorzugt werden im basischen Medium blockierte Isocyanate und/oder umesterungsfähige Vernetzer.

Die Erstellung der wäßrigen ETL-Bäder erfolgt in bekannter Weise, z.B. entsprechend EP-A-0012463, DE-A-3024158, DE-A-2248836, DE-C-2320301 und DE-A-3436346, mit einem nichtflüchtigen Anteil von 8 bis 25%, besonders von 12 bis 19 Gew.-%.

Übliche Nachfolgeschichten von ETL-Grundierungen, die gemäß dem Stand der Technik und vorzugsweise angewandt werden, sind Plastisole, insbesondere PVC-Materialien, Füller oder Decklacke.

Plastisole bestehen aus Kunststoffen bzw. Kunstharzen (bei PVC-Materialien überwiegend aus PVC) und Weichmachern sowie Zusatzmitteln wie Licht- und Wärmestabilisatoren, Viskositätsregulatoren, Pigmenten usw. (Beschichtung mit Lacken und Kunststoffen, K. Weinmann, Verlag W.A. Colomb, Stuttgart 1967, S. 229 ff) Als Weichmacher werden z.B. Ester der Phthalsäure, Phosphorsäure oder chlorierte aliphatische und aromatische Verbindungen verwendet.

Plastisole können durch Streichen, Tauchen, Walzen, Gießen, Spritzen, Aufziehen oder Aufrakeln auf die Grundierung aufgetragen werden. Das PVC-Material wird 3 bis 60 Minuten zwischen 100 und 200°C, besonders 5 bis 10 Minuten bei 120 bis 180°C Objekttemperatur, im Umluftofen geliert.

Füller enthalten als Basisharze z.B. Alkyd-Melamin-Harze (auf Lösungsmittelbasis) oder wasserverdünnbare Maleinatöl-Epoxid-Harze (EP-A-0015035, JP-64-25281, US-P-4042478). Die Füller werden in der Regel elektrostatisch aufgespritzt und 10 bis 40 Minuten bei 100 bis 200°C, vorzugsweise 15 bis 30 Minuten bei 130 bis 170°C, eingebrannt.

Decklacke enthalten als Bindemittel z.B. Alkyd-, Acrylat-, Amino-, Epoxid- oder Polyurethanharze und können sowohl auf Lösungsmittelbasis als auch wasserlöslich sowie Pulverlacke sein. Der Aufbau und die Zusammensetzung dieser Systeme sind in der Literatur vielfach beschrieben (ULLMANNS Encyklopädie der technischen Chemie, 4. Auflage, Band 15 oder H. Kittel, Lehrbuch der Lacke und Beschichtungen, Band IV, Verlag A. Colomb, Berlin 1976). Der Decklack wird durch Spritzen, Tauchen, Aufrakeln, Streichen, Walzen, Gießen oder Aufziehen aufgetragen, Die Aushärtung kann entsprechend dem eingesetzten System durch Einbrennen (10 bis 40 Minuten bei 80 bis 200°C, vorzugsweise 15 bis 30 Minuten bei 120 bis 180°C), UV-Härtung, Elektronenstrahlhärtung oder oxidativ erfolgen.

Die ETL-Grundierung wird aus einer wäßrigen, pigmentierten Dispersion auf einen als Kathode bei KTL-Grundierungen bzw. Anode bei ATL-Grundierungen geschalteten, elektrisch leitfähigen Gegenstand durch Anlegen einer Spannung von 100 bis 500 Volt, besonders aber zwischen 150 und 300 Volt, zwischen 10 und 300 Sekunden abgeschieden und dann thermisch zwischen 10 und 20 Minuten bei 100 bis 250°C, besonders jedoch zwischen 140 und 190°C Objekttemperatur, eingebrannt.

Anschließend erfolgt gemäß der Erfindung die Bestrahlung mit energiereichen Strahlen. Es ist außerordentlich überraschend, daß dies zu einer Verbesserung der Haftung der Nachfolgeschicht, insbesondere PVC, führt, da die Bindemittel aliphatisch gesättigte Kunstharze sind, die keine oder zumindest im wesentlichen keine Doppelbindungen enthalten, die unter Einwirkung von energiereicher Strahlung vernetzen. Unter energiereichen Strahlen werden Strahlen mit einer Wellenlänge, die unterhalb von 400 nm liegen, insbesondere UV- und Elektronenstrahlen, verstanden.

Als Strahlungsquelle für UV-Strahlen sind handelsübliche Nieder-, Mittel- oder Hochdruck-Quecksilber-Lampen geeignet. Die Bestrahlungszeit richtet sich nach der Strahlungsleistung der Strahlen ("UV-Curing, Science and Technology" von S.P. Papas, Technol. Market. Corp., Stampford (USA) 1978). Es kann sowohl polychromatisch, beginnend beim UV(A) als auch system- und bindemittelabhängig monochromatisch im gesamten UV-Bereich bestrahlt werden. Die UV-Bestrahlung führt sowohl unter Luft als auch unter Schutzgas zu einer Verbesserung der PVC-Haftung, besonders vorteilhaft ist die Bestrahlung unter Schutzgas (z.B. Argon oder Stickstoff). Die Bestrahlungszeit liegt zwischen 0,5 und 60 Sekunden, vorzugsweise zwischen 1 und 20 Sekunden.

Quellen für Elektronenstrahlen sind z.B. Linearbeschleuniger mit einer Beschleunigungsspannung von 150 bis 600 KV und einem Strahlstrom bis 150 mA, wie sie im "Lehrbuch der Lacke und Beschichtungen", Band VII, S. 274 bis S. 282, H. Kittel, Verlag W.A. Colomb, beschrieben sind.

Die folgenden Beispiele erläutern die Erfindung.

Zinkphosphatierte Bleche (Bonder 132/60/OA, Fa. Chemetall, Frankfurt) werden mit dem Stand der Technik entsprechenden Elektrotauchlacken beschichtet, die die folgenden Harze enthalten:

Basisharze:

Basisharz A1: Durch Säurezusatz wasserlösliches Amin-Epoxid-Harz auf der Basis von Bisphenol A, umgesetzt mit Epichlorhydrin, nach EP-A-0012463, Beispiel I (b).

Basisharz A2: Basisharz für EPC (Electro Powder Coating) gemäß DE-A-3024158, Seite 10, Zeile 1 bis 17, "Vergleich zu A)".

Basisharz A3: Basisharz durch Umsetzung von Mannichbasen mit Epoxidharzen nach DE-C-2320301, Beispiel 1.

Basisharz A4: Acrylatharz nach DE-A-3436346 (Amino-Poly(meth)acrylatharz A1).

Basisharz A5: Primäre Aminogruppen enthaltendes Amin-Epoxid-Harz nach US-P-3947339, Beispiel 1.

Basisharz A6: Carbamidsäureharz, hergestellt aus Butylurethan und Formaldehyd, mit einer Säurezahl kleiner als 1 (Resamin HF 450®, Hoechst AG, Frankfurt).

Basisharz A7: Aus Acrylsäure, Styrol, Butylacrylat und Hydroxypropylmethacrylat hergestelltes Acrylat, 70%ig in sek.-Butanol/Ethylenglykolmonobutylether, mit einer Säurezahl von 60 bis 90 (Resydrol WY 323®, Vianova Kunstharz Aktiengesellschaft, Wien, Österreich).

Vernetzungsmittel B1: Nichtacider Polyester nach EP-A-0012463, Beispiel II (a).

Vernetzungsmittel B2: Mit ε-Caprolactam verkapptes Isophorondiisocyanat nach DE-A-3436346, Vernetzungsmittel B3,(Crelan®UI, Fa. Bayer, Leverkusen).

Vernetzungsmittel B3: Melamin-Formaldehyd-Harz, mit Isobutanol verethert, (Cymel 1141®, Fa. American Cyanamid Co., Wayne, New Jersey, USA).

Vernetzungsmittel B4: Mit ε-Caprolactam verkapptes Tris-(isocyanatohexyl)-biuret (Desmodur N-100®) nach DE-A-3436346, Vernetzungsmittel B 2.

Vernetzungsmittel B5: Mit 2-Ethylhexanol verkapptes Toluylendiisocyanat nach US-P-3947339, Biespiel 1.

Vernetzungsmittel B6: Methyliertes/ehtyliertes Melamin-Formaldehydharz, Festkörper 98 Gew.%, Säurezahl kleiner als 1 (Cymel 1116®, American Cyanamid Co., Wayne, New Jersey, USA).

Pulverlack C1: Pulverlack nach DE-A-3024158, "Vergleich zu A)".

Die Parameter der Vernetzungsmittel B 3 und B 6 sind nachfolgend zusammengestellt.

| | Vernetzungsmittel | |
| | B3 | B6 |
| --- | --- | --- |
| Festkörpergehalt nach Folien-methode 45 Minuten 45°C | 85% (Masse) | 98% (Masse) |
| Lösungsmittel | Isobutanol | – |
| Viskosität nach 4 DIN 53 211 bei 23°C | 280 | 220 |
| Molekulargröße | Polymer | Monomer |
| Äquivalentgewicht, notwendige Masse Harz in Gramm für 1 mol Carboxylgruppen, Hydroxylgruppen oder Amidgruppen | 200 | 180 |
| Methylolgehalt | sehr niedrig | sehr niedrig |
| Veretherungsalkohol | Methanol, Isobutanol | Methanol, Ethanol |
| Säurezahl, mg KOH/g Festharz | 25 | unter 1 |

Alkydharz D1

702 g destillierte Sojafettsäure, 1011 g Trimethylolpropan, 1083 g Phthalsäureanhydrid und 204 g Benzoesäure werden unter Stickstoff unter Rühren und unter Rückfluß mit Wasserabscheider auf 220°C erhitzt. Diese Temperatur wird gehalten, bis die Säurezahl ca. 14 und die Viskosität bei 25°C nach Verdünnen mit Xylol auf 50% Festkörpergehalt 3000 bis 4000 mPas beträgt. Das Alkydharz wird mit Xylol auf 60% Festkörpergehalt verdünnt.
Kennzahlen:
Festkörpergehalt nach DIN 53 211 : 60 %
Viskosität bei 25°C, 50%ig in Xylol : 3600 mPas
Säurezahl : 13 mg KOH/g Festharz

Alkydharz D2

580 g destillierte Stearinsäure (Säurezahl = 208, Jodzahl unter 1, Titer = 54°C), 340 g α-Ethylhexansäure, 135 g Benzoesäure, 560 g Glycerin und 490 g Trimethylolpropan werden unter Stickstoff unter Rühren und unter Rückfluß mit Wasserabscheider auf 200°C erhitzt und gehalten, bis die Säurezahl unter 20 liegt. Nach Abkühlen auf 160°C werden 1000 g Phthalsäureanhydrid, 150 g Isophthalsäure und 150 g Xylol zugegeben und unter Einrichtung eines Xylol-Kreislaufs auf 230°C erhitzt. Diese Temperatur wird gehalten, bis die Säurezahl ca. 8 und die Viskosität bei 20°C, 50%ig in Xylol, 300 bis 400 mPas beträgt. Das Alkydharz wird mit Xylol auf 60% Festkörpergehalt verdünnt.

Kennzahlen:
Festkörpergehalt nach DIN 53 211 : 60 %
Viskosität bei 20°C, 50%ig in Xylol : 300 bis 400 mPas
Säurezahl : 7 mg/ g Festharz

Melaminharz E1

590 g Formalin, 30%ig, 655 g n-Butanol, 600 g Isobutanol und 27 g wässerige Ammoniaklösung, 25%ig, werden unter Rühren und unter Rückfluß mit Wasserabscheider homogenisiert. Zu diesem Gemisch werden 455 g Paraformaldehyd, 91%ig, 412 g Melamin und 29 g p-Toluolsulfonamid zugegeben. Die Reaktionsmischung wird innerhalb 45 Minuten auf Rückflußtemperatur erhitzt und 5 Stunden unter Rückfluß gehalten.
Nach Abkühlen auf 90°C werden 183 g Xylol, 0.6 g Phthalsäureanhydrid und 48 g Isobutanol zugesetzt. Die Reaktionsmischung wird erneut auf Rückflußtemperatur erhitzt und gehalten, bis 2 g der Reaktionsmischung mit 8 bis 14 ml Lackbenzin, Flammpunkt 36°C, Siedegrenzen 145 bis 200°C, Aromatengehalt 18 Vol.-%, eine deutliche Trübung zeigen. (Trübungstitration). Die Melaminharzlösung wird schnell unter 35°C gekühlt.
Kennzahlen:
Festkörpergehalt, 1 Stunde bei 120°C : 56%
Viskosität bei 25°C : 260 mPas
Trübung mit Lackbenzin : 9 ml/ 2 g Melaminharzlösung

Haftvermittler F1:

Polyaminoamid gemäß der DE-B-2654871 aus
800 g polymerer Fettsäure (1) und 200 g polymerer Fettsäure (2) und 534 g Triethylentetramin hergestellt (Aminzahl 387, IA 78%)

| Polymere Fettsäure besteht laut GLC aus: | (1) | (2) |
|---|---|---|
| Monomeren Fettsäuren | 9% | 1% |
| Dimeren Fettsäuren | 75% | 25% |
| Trimeren Fettsäuren und höher polymeren Fettsäuren | 16% | 74% |

Beispiel 1:

Die Harzlösung A1 (163.7 g; 114.6 g Festkörper) und der Polyester B1 (42.6 g), gelöst in Ethylenglykolmonobutylether (18.3 g), werden miteinander gemischt. Dann wird Pb-octoat (3.1 g) und Ameisensäure (5.4 g) zugegeben. Zu dieser Mischung gibt man langsam unter Rühren deionisiertes Wasser (393 g). Die erhaltene, milchige Dispersion hat einen Anteil der nichtflüchtigen Bestandteile von 25 Gew.%.
200 g dieser Dispersion, Titandioxid (32.3 g), Ruß (3.2 g) und Aluminiumsilicat (2.0 g) werden 90 Minuten in einer Sandmühle dispergiert, bis eine Korngröße von 10 bis 20 nach Hegman erreicht ist. Zu dieser Pigmentpaste wird die oben beschriebene Dispersion (400 g) zugesetzt und mit deionisiertem Wasser (612.5 g) weiter verdünnt, so daß ein nichtflüchtiger Anteil von 15 Gew.% erhalten wird. Der resultierende Elektrotauchlack hat einen pH-Wert von 5.8 und eine Bad-Leitfähigkeit von 1700 µS/cm.

Abscheidebedingungen:

Spannung: 200 V
Badtemperatur: 28°C
Abscheidezeit: 3 Minuten
Die Bleche werden nach der Abscheidung mit Wasser gespült.
Einbrenntemperatur: 180°C
Einbrennzeit: 17 Minuten
Trockenfilmstärke: 18 - 20 µm

Etwa 1 Stunde nach dem Einbrennen werden die ausgehärteten KTL-Grundierungen bestrahlt.
UV-Strahler : Hanovia Typ 8512 A 431
(Fa. Ulrich Steinemann AG,
St. Gallen Schweiz)
Strahlungsintensität: 80 W/cm bei 365 nm
Strahlungsabstand: 8 cm

3 UV-Strahler sind nebeneinander so angeordnet, daß sich eine Bestrahlungszone von 50 cm Breite ergibt. Die Bleche werden auf einem Transportband mit einer Geschwindigkeit von 2 m/Min (15 Sec. Bestrahlungszeit) und 6 m/Min. (5 Sec.) durch die Bestrahlungszone geführt. Die Strahler sind von einer Haube umschlossen, die vorne und hinten jeweils einen Schlitz von 2 cm Höhe für das Transportband haben. Am hinteren Ende der Haube sitzen Düsen, durch die Stickstoff in die Haube geblasen werden kann, so daß nach einer kurzen Spülzeit von etwa 1 Minute eine Quasistickstoffatmosphäre in der Haube vorhanden ist. Bei der Bestrahlung unter Schutzgas wird weiter Stickstoff durch die Haube geblasen.

Es werden 1 cm breite und 2 mm dicke Streifen folgender PVC-Plastisole auf die so behandelten Testbleche aufgetragen:

PVC-Richtrezeptur:

Ein Plastisol wurde aus folgenden Bestandteilen hergestellt:

|  | Gew.-Teile |
|---|---|
| Polyvinylchlorid Hostalit P 4472® (Fa. Hoechst AG, Frankfurt) | 22 |
| Dioctylphthalat | 28 |
| Calziumcarbonat | 50 |
|  | 100 |

Zu 100 Gew.-Teilen von diesem Plastisol wurden 1.5 Gew.-Teile Stabilisator (Di-n-butylzinn-bis-thioglycolsäureisooctylester) sowie 1 Gew.-Teil Haftvermittler Euretek 501® (Fa. Schering AG, Bergkamen) zugemischt.

Außerdem wurden die nachfolgenden Plastisole verwendet, die im Handel erhältlich sind.

Nahtabdichtung (zum Abdichten von Schweißnähten an Automobilkarossen):

Dekalin 9003 (Fa. Dekalin Deutsche Klebstoff-Werke, Hanau)

Unterbodenschutz:

Stankiewicz 2252® (Fa. Dr. A. Stankiewicz GmbH, Celle) Intercol 20755® (Fa. Intercol Kleb- und Riechstoff GmbH, Bodenheim/Rhein)

Terotek 3642® (Fa. Teroson GmbH, Heidelberg)

Einbrennbedingungen: 7 Minuten 140°C Objekttemperatur Die PVC-Haftung wird 1 Stunde nach dem Einbrennen geprüft.

PVC-Haftung nach UV-Bestrahlung Tabelle I:

Tabelle I

| PVC | Keine Bestrahlung | Unter Luft bestrahlt | | Unter Stickstoff bestrahlt |
|---|---|---|---|---|
|  | (Nullprobe) | 5 Sec. | 15 Sec. | 5 Sec. |
| Richtrezeptur | 5 | 3 | 1–2 | 1 |
| 9003 | 5 | 3 | 1–2 | 1 |
| 2252 | 5 | 2 | 1 | 1 |
| 20755 | 5 | 2 | 1–2 | 1 |
| 3642 | 5 | 1 | 1 | 1 |
| Bewertung: | 5 = keine Haftung | | | |
|  | 1 = sehr gute Haftung | | | |

Beispiel 2:

Wie in Beispiel 1, jedoch Bestrahlung mit Elektronenstrahlen.

Elektronenstrahlanlage : ESH 150-20 (Fa. Dürr,Stuttgart)
Beschleunigungsspannung : 150 kV
Strahlstrom : 20 mA

Tabelle II

| PVC | Nullprobe | Unter Luft bestrahlt | Streustrahl |
|---|---|---|---|
| Richtrezeptur | 5 | 1–2 | 2 |
| 9003 | 5 | 1 | 2 |
| 2252 | 5 | 1–2 | 1–2 |
| 3642 | 5 | 2 | 2 |

Bewertung wie Beispiel 1.

Beispiel 3:

Wie Beispiel 1, jedoch wurde als Nachfolgeschicht der folgende Füller aufgetragen:

| Füllerrichtrezeptur | Gew.-Teile |
|---|---|
| Alkydal F 26® (Bayer AG, Leverkusen) | 40.00 |
| Maprenal MF 800® (Hoechst AG, Frankfurt) | 4.50 |
| Eisenoxidrot | 16.00 |
| Bleisilicochromat | 9.00 |
| Talkum | 8.00 |
| Muscovit-Glimmer | 5.00 |
| Xylol | 14.00 |
| Ethylenglykolmonoethylether | 3.50 |
| | 100.00 |

Spritzverdünnung: Xylol/Ethylenglykolmonoethylether 4/1
Nach dem Aufspritzen auf die UV-bestrahlte Grundierung wird der Füller 10 Minuten bei 140°C eingebrannt.
Trockenfilmstärke: 36 bis 38 μm
Die Haftungsprüfung erfolgt 24 Stunden nach dem Einbrennen. Tabelle III:

Tabelle III

| Nullprobe | UV-bestrahlt |
|---|---|
| 5 | 2 |

Beispiel 4:

Herstellung des pigmentierten Elektrotauchlackes erfolgt wie in Beispiel 1 beschrieben, jedoch ist der Vernetzer B1 durch Vernetzer B2, gelöst in Ethylenglykolmonobutylether (18.3 g) ersetzt und als Pigment wird nicht Ruß, sondern nur Titandioxid (20.5 g) und Aluminiumsilicat (15.0 g) verwendet.
Abscheidebedingungen siehe Beispiel 1.
Trockenfilmstärke: 18 bis 19 μm.
UV-Bestrahlung und PVC-Prüfung wie Beispiel 1. Tabelle IV:

7

Tabelle IV

| PVC | (Nullprobe) | Unter Luft bestrahlt | | Unter Stickstoff bestrahlt |
|---|---|---|---|---|
| | | 5 Sec. | 15 Sec. | 5 Sec. |
| Richtrezeptur | 5 | 3 | 1–2 | 1 |
| 9003 | 5 | 4 | 2 | 1–2 |
| 2252 | 5 | 2 | 1 | 1 |
| 20755 | 5 | 4 | 2 | 1–2 |
| 3642 | 5 | 3 | 2 | 1 |

Beispiel 5:

Wie Beispiel 4, jedoch Bestrahlung mit Elektronenstrahlen.Tabelle V:

Tabelle V

| PVC | Nullprobe | Unter Luft bestrahlt | Streustrahl |
|---|---|---|---|
| Richtrezeptur | 5 | 2 | 2 |
| 9003 | 5 | 2 | 2 |
| 2252 | 5 | 1 | 1 |
| 3642 | 5 | 2 | 2 |

Beispiel 6:

Herstellung des pigmentierten Elektrotauchlackes erfolgt nach Beispiel 4, jedoch ist der Vernetzer B2 durch den Vernetzer B3, gelöst in Butylglykol (18.3 g) ersetzt.
Abscheidebedingungen siehe Beispiel 1.
Trockenfilmstärke: 19 bis 20 µm.
UV-Bestrahlung und PVC-Prüfung wie Beispiel 1. Tabelle VI:

Tabelle VI

| PVC | Nullprobe | Unter Luft bestrahlt | |
|---|---|---|---|
| | | 5 Sec. | 15 Sec. |
| Richtrezeptur | 5 | 3 | 2 |
| 9003 | 5 | 4 | 2 |
| 2252 | 5 | 3 | 2 |
| 20755 | 5 | 4 | 2 |
| 3642 | 5 | 3 | 1 |

Beispiel 7:

Wie Beispiel 6, jedoch Bestrahlung mit Elektronenstrahlen. Tabelle VII:

Tabelle VII

| PVC | Nullprobe | Unter Luft bestrahlt | Streustrahl |
|---|---|---|---|
| Richtrezeptur | 5 | 1–2 | 1–2 |
| 9003 | 5 | 2 | 2 |
| 2252 | 5 | 1–2 | 1–2 |
| 3642 | 5 | 2 | 2 |

Beispiel 8:

Wie Beispiel 6, jedoch wurde folgender Decklack aufgetragen.

| Decklackrichtrezeptur: | Gew.-Teile |
|---|---|
| Alkydal F 310® (Bayer AG, Leverkusen) | 36.50 |
| Maprenal MF 800® (Hoechst AG, Frankfurt) | 14.00 |
| $TiO_2$ | 34.00 |
| Butanol | 4.00 |
| Ethylenglykolmonoethylether | 1.45 |
| Xylol | 10.00 |
| Siliconöl | 0.05 |
| | 100.00 |

Spritzverdünnung: Xylol/Butanol 9/1
Der Decklack wird auf die UV-bestrahlte Grundierung aufgespritzt und dann 15 Minuten bei 150°C eingebrannt.
Trockenfilmstärke: 35 bis 37 µm.
Die Haftungsprüfung erfolgt 24 Stunden nach dem Einbrennen.

Tabelle VIII

| Nullprobe | UV-bestrahlt |
|---|---|
| 4 | 2 |

Beispiel 9:

Es wurde ein pigmentierter Elektrotauchpulverlack nach DE-A-3024158 (Vergleich zu Beispiel A) eingesetzt, wobei jedoch das Eisenoxidpigment (50 Teile) gegen Titandioxid (45.5 Teile) und Ruß (4.5 Teile) ausgetauscht wurde.

Abscheidebedingungen:
Spannung : 200 V
Temperatur : 25°C
Zeit : 25 Sekunden

Nachdem die beschichteten Bleche mit Wasser gespült wurden, werden sie 10 Min. bei 70°C vorgeliert und dann 15 Min. bei 185°C Objekttemperatur eingebrannt.
Trockenfilmstärke: 40 bis 44 µm.
UV-Bestrahlung und PVC-Auftrag wie Beispiel 1.

Tabelle IX

| PVC | Nullprobe | Unter Luft bestrahlt | |
|---|---|---|---|
| | | 5 Sec. | 15 Sec. |
| Richtrezeptur | 5 | 3 | 2 |
| 9003 | 3 | 3 | 1–2 |
| 2252 | 3 | 2 | 1 |
| 20755 | 5 | 4 | 1–2 |
| 3642 | 2 | 2 | 1 |

Beispiel 10:

Wie Beispiel 9, jedoch Bestrahlung mit Elektronenstrahlen.

Tabelle X

| PVC | Nullprobe | Unter Luft bestrahlt | Streustrahl |
|---|---|---|---|
| Richtrezeptur | 5 | 2 | 2 |
| 9003 | 5 | 2 | 2 |
| 2252 | 5 | 2 | 2 |
| 3642 | 5 | 2 | 2 |

Beispiel 11:

Zu der in DT 2320301 (Beispiel 1) beschriebenen Harzdispersion (400 g) mit einem Gehalt an nichtflüchtigen Bestandteilen von 40 Gew.% werden Ruß (12 g) und Aluminiumsilicat (48 g) zugegeben und auf einer Perlmühle so lange dispergiert, bis eine Korngröße von 10 bis 20 nach Hegman beobachtet wird. Die erhaltene Pigmentpaste wird langsam unter Rühren mit deionisiertem Wasser (2540 g) versetzt. Der Festgehalt dieser Dispersion beträgt 15 Gew.%.

Abscheidebedingungen:
Spannung: 150 V
Temperatur: 25°C
Zeit: 2 Minuten
Trockenfilmstärke: 19 bis 20 μm
Einbrennung siehe Beispiel 1.

UV-Bestrahlung und PVC-Auftrag wie Beispiel 1.

Tabelle XI

| PVC | Nullprobe | Unter Luft bestrahlt | | |
|---|---|---|---|---|
| | | 5 Sec. | 15 Sec. | 5 Sec. |
| Richtrezeptur | 5 | 2 | 1–2 | 1 |
| 9003 | 5 | 3 | 2 | 1 |
| 2252 | 4 | 4 | 2 | 1 |
| 20755 | 5 | 4 | 2 | 1 |
| 3642 | 4 | 4 | 2 | 1 |

Beispiel 12:

Die Herstellung des pigmentierten Elektrotauchlackes erfolgt mit Basisharz A4 und Vernetzungsmittel B1 nach DE-A-3436346, Beispiel 3.

Abscheidebedingungen:
Spannung: 210 V
Temperatur: 28°C
Zeit: 2 Minuten
Trockenfilmstärke: 17 bis 18 μm

Einbrennung sowie UV-Bestrahlung und PVC-Auftrag wie Beispiel 1.

Tabelle XII

| PVC | Nullprobe | Unter Luft bestrahlt | |
|---|---|---|---|
| | | 5 Sec. | 15 Sec. |
| Richtrezeptur | 5 | 3 | 2 |
| 9003 | 4 | 3 | 2 |
| 2252 | 4 | 3 | 2 |
| 20755 | 5 | 4 | 3 |
| 3642 | 5 | 3 | 2 |

Beispiel 13:

Wie Beispiel 12, jedoch Bestrahlung mit Elektronenstrahlen.
Bestrahlung und PVC-Prüfung siehe Beispiel 1.

Tabelle XIII

| PVC | Nullprobe | Unter Luft bestrahlt | Streustrahl |
|---|---|---|---|
| Richtrezeptur | 5 | 1–2 | 2 |
| 9003 | 5 | 1 | 2 |
| 2252 | 5 | 1–2 | 1–2 |
| 3642 | 5 | 2 | 2 |

Beispiel 14:

Die Herstellung des pigmentierten Elektrotauchlackes erfolgt nach Beispiel 12, jedoch wird der Vernetzer B1 gegen den Vernetzer B4 ausgetauscht.

Abscheidebedingungen:
Spannung: 210 V
Temperatur: 28°C
Zeit: 2 Minuten
Trockenfilmstärke: 18 bis 19 μm

Einbrennung sowie UV-Bestrahlung und PVC-Auftrag wie Beispiel 1. Tabelle XIV:

Tabelle XIV

| PVC | Nullprobe | Unter Luft bestrahlt | |
|---|---|---|---|
| | | 5 Sec. | 15 Sec. |
| Richtrezeptur | 5 | 4 | 2–3 |
| 9003 | 5 | 4 | 2 |
| 2252 | 5 | 4 | 2 |
| 20755 | 5 | 4 | 3 |
| 3642 | 5 | 4 | 2 |

Beispiel 15:

Die Herstellung des pigmentierten Elektrotauchlackes erfolgt nach Beispiel 12, jedoch ist der Vernetzer B1 gegen den Vernetzer B3 ausgetauscht.

Abscheidebedingungen:
Spannung: 220 V
Temperatur: 28°C
Zeit: 2 Minuten
Trockenfilmstärke: 17 bis 18 μm

Einbrennung sowie UV-Bestrahlung und PVC-Auftrag wie Beispiel 1.

Tabelle XV

| PVC | Nullprobe | Unter Luft bestrahlt | |
|---|---|---|---|
| | | 5 Sec. | 15 Sec. |
| Richtrezeptur | 5 | 3 | 2 |
| 9003 | 5 | 3 | 2 |
| 2252 | 5 | 3 | 2 |
| 20755 | 5 | 4 | 3 |
| 3642 | 5 | 3 | 2 |

Beispiel 16:

Die Herstellung des primäre Aminogruppen enthaltenden Epoxidharzes A5 mit verkapptem Isocyanat als Härter B5 zu einem pigmentierten Elektrotauchlack wurde nach US-PA-3947339, Beispiel 1, durchgeführt. Jedoch wurde in Beispiel A für die Pigmentpaste nicht Phthalocyanin blau (60 T) und Eisenoxid braun (140 T) sondern Ruß (40 T) und Aluminiumsilikat (160 T) eingesetzt.

Abscheidebedingungen:
Abscheidespannung: 280 V
Abscheidetemperatur: 28°C
Abscheidezeit: 2 Minuten
Trockenfilmstärke: 20 bis 21 μm

Einbrennbedingungen sowie UV-Bestrahlung und PVC-Auftragung wie Beispiel 1.

Tabelle XVI

| PVC | Nullprobe | Unter Luft bestrahlt | |
|---|---|---|---|
| | | 5 Sec. | 15 Sec. |
| Richtrezeptur | 5 | 3 | 2 |
| 9003 | 4 | 3 | 2 |
| 2252 | 4 | 3 | 2 |
| 20755 | 4 | 3 | 2 |
| 3642 | 4 | 3 | 2 |

Beispiel 17:

Die Basisharze A6 (43 g) und A7 (303 g; 212 g Festkörper) werden unter Zusatz von Ethylenglykolmonobutylether (73 g) miteinander vermischt. Dann gibt man Phthalocyanin gelb (65 g), Azopigment (43 g), Titandioxid (22 g) und Aluminiumsilicat (15 g) hinzu und dispergiert die Mischung 90 Minuten in einer Perlmühle bis eine Korngröße von 10 bis 15 nach Hegman erreicht ist.
Nach dem Abkühlen auf 25°C werden der Vernetzer B6 (111 g; 109 g Festkörper) und Triethylamin (36 g) in die Mischung dispergiert und dann mit 2400 g deionisiertem Wasser verdünnt, so daß ein Festkörperanteil von 17 Gew.% erhalten wird.
Der resultierende Elektrotauchlack hat einen pH-Wert von 8.9 und eine Badleitfähigkeit von 800 μS/cm.

Abscheidebedingungen:
Abscheidespannung: 200 V
Abscheidetemperatur: 25°C
Abscheidezeit: 2 Minuten
Einbrennbedingungen: 25 Minuten bei 175°C
Trockenfilmstärke: 18 bis 19 μm

UV-Bestrahlung und PVC-Auftragung wie Beispiel 1.

Tabelle XVII

| PVC | Nullprobe | Unter Luft bestrahlt | |
|---|---|---|---|
| | | 5 Sec. | 15 Sec. |
| Richtrezeptur | 5 | 3 | 2 |
| 9003 | 5 | 3 | 2 |
| 2252 | 5 | 3 | 2 |
| 20755 | 5 | 3 | 2 |
| 3642 | 5 | 3 | 2 |

**Patentansprüche**

1. Verfahren zum Beschichten von elektrisch leitfähigen Oberflächen aufweisenden Substraten durch Auftragen einer ETL(Elektrotauchlack)-Grundierung mit einem Bindemittel aus aliphatisch gesättigten, gegebenenfalls aromatische Gruppen enthaltenden Kunstharzen, Trocknen oder Einbrennen dieser Grundierung und Aufbringen und Einbrennen von mindestens einer Folgeschicht, dadurch gekennzeichnet, daß die ETL-Grundierung nach dem Trocknen oder Einbrennen mit Strahlung mit einer Wellenlänge unterhalb von 400 nm wird.

2. Verfahren nach Anspruch 1, dadurch gekennzeichnet, daß mit UV-Strahlen bestrahlt wird.

3. Verfahren nach Anspruch 1 oder 2, dadurch gekennzeichnet, daß unter Stickstoffatmosphäre bestrahlt wird.

4. Verfahren nach einem oder mehreren der Ansprüche 1 bis 3, dadurch gekennzeichnet, daß mit Elektronenstrahlen bestrahlt wird.

5. Verfahren nach einem oder mehreren der Ansprüche 1 bis 4, dadurch gekennzeichnet, daß die Folgeschicht eine PVC-Beschichtung ist.

6. Verfahren nach einem oder mehreren der Ansprüche 1 bis 5, dadurch gekennzeichnet, daß die ETL-Grundierung eine KTL-Grundierung ist.

**Claims**

1. A process for coating substrates having electrically conductive surfaces by application of an EC (electrodeposition coating) primer containing a binder of aliphatically saturated synthetic resins optionally containing aromatic groups, drying or stoving of the primer and application and stoving of at least one following layer, characterized in that, after drying or stoving, the ETL primer is exposed to radiation having a wavelength below 400 nm.

2. A process as claimed in claim 1, characterized in that UV light is used for the irradiation.

3. A process as claimed in claim 1 or 2, characterized in that the irradiation is carried out in a nitrogen atmosphere.

4. A process as claimed in one or more of claims 1 to 3, characterized in that electron beams are used for the irradiation.

5. A process as claimed in one or more of claims 1 to 4, characterized in that the following layer is a PVC coating.

6. A process as claimed in one or more of claims 1 to 5, characterized in that the EC primer is a CEC primer.

**Revendications**

1. Procédé pour revêtir des substrats à surfaces conductrices de l'électricité, par dépôt d'apprêt ETL (peinture électrophorétique) avec un liant constitué par des résines synthétiques aliphatiques saturées, contenant éventuellement des groupes aromatiques, par séchage ou cuisson de cet apprêt et le dépôt et la cuisson d'au moins une couche supplémentaire, caractérisé en ce qu'après le séchage ou la cuisson, on irradie l'apprêt ETL avec un rayonnement possédant une longueur d'onde inférieure à 400 nm.

2. Procédé selon la revendication 1, caractérisé en ce qu'on réalise l'irradiation avec un rayonnement ultraviolet.

3. Procédé selon la revendication 1 ou 2, caractérisé en ce qu'on exécute l'irradiation dans une atmosphère d'azote.

4. Procédé selon une ou plusieurs des revendications 1 à 3, caractérisé en ce qu'on réalise l'irradiation avec un faisceau d'électrons.

5. Procédé selon une ou plusieurs des revendications 1 à 4, caractérisé en ce que la couche supplémentaire est un revêtement de PVC.

6. Procédé selon une ou plusieurs des revendications 1 à 5, caractérisé en ce que l'apprêt ETL est formé par un apprêt KTL obtenu par dépôt cathodique.